# DEMANDE DE BREVET EUROPEEN

(11) **EP 2 065 164 A1**
(43) Date de publication de la demande: **03.06.2009**
(21) Numéro de dépôt: 07121609.7
(22) Date de dépôt: 27.11.2007
(51) Int. Cl.: B29C 49/48, B65D 1/02

(54) **Procédé de fabrication d'un emballage pour remplissage à chaud ainsi qu'un tel emballage**

(71) Demandeur: Aisapack Holding SA, 1896 Vouvry (CH)
(72) Inventeur: Thomasset, Jacques, 1896 Vouvry (CH)
(74) Mandataire: Grosfillier, Philippe

(57) **Abrégé**

L'invention concerne un procédé de fabrication d'un emballage rempli à chaud comprenant une étape de soufflage d'une préforme dans la cavité d'un moule, caractérisé par le fait que l'on utilise une préforme de géométrie, de poids et de composition identiques à une préforme d'emballage rempli à froid et que pendant toute la durée de fabrication de l'emballage, on maintient le moule à une température inférieure à la température de transition vitreuse du matériau qui constitue l'emballage.

L'invention concerne également un emballage obtenu avec le procédé décrit ci-dessus.

## Description

### Domaine de l'invention

La présente invention se rapporte à un emballage en polyéthylène téréphtalate (PET), rempli à chaud, ainsi qu'au procédé de remplissage dudit emballage. Le procédé s'applique notamment au conditionnement d'un produit à plus de 80 °C dans une bouteille en PET n'ayant pas été fabriquée avec les procédés de soufflage dits « Heat Résistant » et plus communément désigné par les lettres HR.

### Etat de la technique

Les bouteilles en polyéthylène téréphtalate (PET) sont utilisées dans de nombreux domaines du fait leurs excellentes propriétés : résistance, légèreté, transparence, organoleptique. Ces bouteilles sont fabriquées à grande cadence par étirage bi-axial d'une préforme dans un moule.

Dans le présent texte, par « remplissage à chaud », il faut comprendre un remplissage où la température du liquide est supérieure à la température ambiante, en général supérieure à 80 °C.
Par « remplissage à froid », on entend température ambiante ou température inférieure à la température ambiante.
La fabrication de bouteilles en PET pour les bouteilles remplies à froid recourt au procédé de soufflage d'une préforme dans la cavité d'un moule. La préforme fabriquée par injection ressemble à un tube dont une extrémité est bouchée, et dont l'autre extrémité forme un goulot. Après chauffage de cette préforme par rayonnement infrarouges jusqu'à 95/120°C, le PET amorphe est ramolli et subit une déformation par soufflage dans la cavité d'un moule. Pendant la phase de soufflage, la préforme est déformée bi axialement grâce à l'action conjuguée d'une tige d'étirage et grâce à de l'air introduit sous pression dans la préforme et provoquant un gonflage. Les moules sont refroidis avec de l'eau afin de dissiper par contact les calories du PET, ce qui a pour effet de figer la géométrie de la bouteille. Les bouteilles obtenues sont dites bi orientées car elles ont subies lors de leur fabrication un étirage bi axial. Les chaînes macromoléculaires ainsi orientées conduisent à d'excellentes propriétés mécaniques et optiques à température ambiante. L'inconvénient de cette bi orientation résulte de son caractère réversible et la matière cherche à retrouver son état initial dès que la température s'élève ; phénomène dit de mémoire de forme.

Aussi, bien que ces bouteilles offrent de nombreux avantages, elles présentent l'inconvénient de se déformer lorsque leur température est supérieure à 60°C. Le conditionnement d'un produit à haute température 85 / 95°C dans ces bouteilles engendre des déformations telles, que lesdites bouteilles deviennent impropres à la consommation. Plusieurs procédés sont décrits dans l'art antérieur afin de remédier à l'inconvénient précité et permettre le remplissage à chaud de bouteilles PET.

La solution la plus courante pour permettre le conditionnement d'un liquide chaud dans une bouteille PET consiste à utiliser conjointement un procédé de soufflage des bouteilles dit « Heat Resistant » ainsi qu'une conception de bouteille spécifique.

Les procédés dits « Heat Resistant » et plus communément désignés par les lettres HR, permettent d'améliorer la résistance thermique des bouteilles. Ainsi, il existe un premier procédé HR, dit à une roue, qui permet d'atteindre des températures de remplissage de 80 à 88°C. Un second procédé HR, dit à deux roues, permet de conditionner des liquides à des températures de 88 à 95°C.

Parallèlement au procédé de fabrication HR des bouteilles, il est nécessaire de recourir à des conceptions de bouteilles différentes. Lors du conditionnement, les bouteilles doivent résister au vide généré par le refroidissement du liquide alors que ladite bouteille a été bouchée à chaud. Le refroidissement provoque une double contraction, celle du liquide et celle de l'air emprisonné dans la bouteille. Aussi, les bouteilles remplies à chaud comportent des panneaux de compensation permettant d'absorber la variation de volume, et des parties plus rigides évitant une déformation incontrôlée de la bouteille. Ces conceptions nécessitent des épaisseurs de paroi plus importantes et conduisent à des bouteilles dont le poids peut aller jusqu'à deux fois le poids d'une bouteille remplie à froid.
Les procédés HR utilisés pour confectionnés des bouteilles destinées à être remplies à chaud, recourent également au soufflage d'une préforme dans la cavité d'un moule mais avec des paramètres de conduite plus sophistiqués et plus complexes. En effet, la préforme est chauffée à une température plus élevée que dans le cas du soufflage d'un contenant rempli à froid. La température de soufflage élevée permet de minimiser la mémoire de forme du PET et relaxer une partie des contraintes dues au soufflage. Dans le cas du procédé HR dit à une roue, on fait subir un traitement thermique à la bouteille lorsqu'elle entre en contact avec les parois du moule. La température élevée des parois du moule à pour effet d'augmenter la cristallisation des chaînes de PET bi orientées et améliorer ainsi sa résistance à la température. Une circulation d'air à l'intérieur de la bouteille permet d'évacuer les calories du PET et ainsi solidifier les parois de la bouteille avant l'éjection du moule. Dans le cas du procédé HR dit à deux roues, le procédé permet d'atteindre une résistance thermique plus élevée mais au prix d'une succession d'étapes plus complexes. En effet, la première étape consiste à souffler une ébauche dont le volume est beaucoup plus grand que celui de la bouteille ; cette ébauche ayant un fort taux de cristallisation est ensuite rétractée par réchauffement au delà de la transition vitreuse ; l'ébauche restreinte est finalement soufflée dans la cavité d'un moule correspondant aux dimensions de la bouteille à fabriquer. La bouteille présente un fort taux de cristallisation, ce qui permet le remplissage à des températures comprises entre 88 et 95°C.

Cependant, les bouteilles ayant subis un traitement thermique afin de permettre le conditionnement d'un liquide à haute température, présentent plusieurs inconvénients.

Un premier inconvénient est lié à la diminution de la cadence de production des bouteilles parce que le procédé de thermo-fixation ralentit le cycle de soufflage.

Les procédés HR sont plus complexes que le procédé de soufflage conventionnel et par conséquent plus lourd à mettre en place et à utiliser.

Un deuxième inconvénient est lié au poids et par conséquent au coût de ces bouteilles. Comme il l'a été exposé précédemment, l'ajout de matière permet de faire face au vide qui se crée dans l'emballage et à la température de remplissage élevée. Cependant, la solution actuelle utilise un excédent de matière qui n'est pas strictement nécessaire à la bonne conservation du produit. De plus, les panneaux de compensation nuisent à l'esthétisme de l'emballage, ce qui le rend moins attractif pour le consommateur.

La demande de brevet FR2887238 propose de remédier en partie aux inconvénients précités en réalisant des bouteilles à parois minces aptes au remplissage à chaud. Ces bouteilles sont fabriquées avec un procédé de soufflage HR ayant une ou deux roues tel qu'exposé précédemment, et ont par conséquent des propriétés permettant le remplissage à chaud sans rétraction de l'emballage. Les bouteilles proposées dans la demande FR2887238 présentent de nombreux avantages car elles ne comportent pas de panneaux de rétraction, et ont un poids réduit par rapport aux emballages utilisés par l'homme du métier ; ce poids étant sensiblement équivalent à celui des contenants utilisés pour contenir de l'eau minérale, à contenance égale. Le récipient est de forme cylindrique, éventuellement avec des cannelures pour rigidifier le corps, avec un fond léger comme celui des contenants pour eau minérale plate, mais renforcé. Cet emballage est rempli à chaud sur une remplisseuse de type connu, le liquide étant porté et maintenu à une température de 60 à 95 °C en fonction des applications visées. Après bouchonnage à chaud et refroidissement, il se crée un vide dans la bouteille qui crée une déformation importante du corps de la bouteille. Le procédé, selon la demande FR2887238 consiste à réduire le volume de la bouteille en provoquant une rétraction par chauffage des parois de la bouteille lorsque la température du liquide est inférieure à une transition de l'ordre de 40 à 50°C. Malgré les nombreux avantages qu'elle apporte, la demande de brevet FR2887238 présente plusieurs inconvénients.

Un premier inconvénient est lié au mode de fabrication de ces bouteilles qui nécessite un procédé de soufflage HR à une ou deux roues afin de rendre l'emballage suffisamment résistant à la température. Comme, il l'a été exposé préalablement, ces procédés de fabrication sont complexes et par conséquent plus difficile à exploiter. Cela a une répercussion sur le coût des emballages produits.

Le second inconvénient du procédé proposé, réside dans la difficulté de rétracter le volume du récipient par chauffage sachant que ledit récipient a été fabriqué avec un procédé de soufflage HR le rendant plus résistant à la température.

### Exposé général de l'invention

L'invention propose de remédier aux inconvénients précités en utilisant un emballage fabriqué avec un procédé de soufflage conventionnel, c'est-à-dire sans procédé de soufflage dit «Heat resistant» , plus communément désigné par les lettres HR.

L'invention comprend en particulier un emballage de faible poids dont l'aptitude au remplissage à chaud n'est pas apportée par un procédé de soufflage HR mais par la combinaison inattendue de plusieurs facteurs dont la conception de l'emballage, le choix du grade PET et le réglage du procédé de fabrication de l'emballage.

Le poids de l'emballage selon l'invention étant sensiblement équivalent à celui d'un emballage, p.ex. une bouteille, destinée à contenir un liquide rempli à froid.
A relever par ailleurs que l'emballage selon l'invention est conçu pour résister à la pression et non à la dépression comme il est proposée dans l'art antérieur. Avantageusement, le fond de l'emballage est conçu pour résister à une pression positive dans l'emballage.

L'invention consiste également en un procédé de remplissage à chaud d'un emballage, tel que bouteille en PET, qui n'est pas fabriqué avec un procédé HR et dont l'aptitude au remplissage à chaud résulte de la combinaison entre la conception de la bouteille et son mode de fabrication. Le procédé de remplissage comprend en outre une étape de rétraction de l'emballage lorsque le liquide rempli à chaud est refroidi totalement ou en partie.

### Exposé détaillé de l'invention

L'invention sera mieux comprise ci-dessous au moyen d'un exemple décrivant la fabrication d'une bouteille en PET remplie à chaud qui est fabriquée à partir d'une préforme selon un procédé de soufflage conventionnel et n'étant pas un procédé HR. La bouteille présente une résistance à la température élevée du fait d'une synergie inattendue entre la géométrie de la bouteille, le procédé de fabrication et la résine utilisée.

Contrairement, aux solutions de l'art antérieur qui proposent d'augmenter la cristallinité des emballages en PET afin d'améliorer leur résistance à la température, l'invention propose l'utilisation d'un emballage dont le taux de cristallisation plus faible ne permet pas à lui seul de résister à la température de remplissage. La résistance thermique de l'emballage résulte de l'action conjuguée du taux de cristallisation, de la géométrie de l'emballage et du réglage du procédé de fabrication. L'invention est d'un grand intérêt car elle permet d'éviter les procédés de fabrications dits HR, à une ou deux roues, utilisés pour augmenter le taux de cristallisation de l'emballage. Ces procédés comportent des étapes complexes ralentissant la cadence de production et ayant un fort impact sur le coût des emballages produits.

Comme indiqué plus haut, l'exemple détaillé de l'invention décrit des bouteilles en PET mais il va de soi que l'invention ne se limite pas à ce type d'objet. D'autres types d'emballages, p.ex. en PET ou résines similaires, font également l'objet de l'invention.

La bouteille comporte un goulot, un corps généralement cylindrique, et un fond. Le poids de la bouteille est similaire à celui d'une bouteille pour eau minérale ou boisson carbonatée, à contenance équivalente.

Le goulot est d'épaisseur réduite par rapport aux goulots des bouteilles fabriquées avec un procédé HR. Par exemple, le goulot de bouteille pour boisson carbonatée est particulièrement adapté.

Le corps de la bouteille est généralement de forme cylindrique, de faible épaisseur et peut comporter des nervures qui apportent de la rigidité. La bouteille ne comporte pas les éléments caractéristiques des bouteilles en PET conditionnées à chaud, tels que panneaux, ceinture, bulbe à l'épaule. Selon un mode préférentiel de réalisation de l'invention, le corps cylindrique comporte cependant une zone de rétreint destinée à supprimer le vide dans la bouteille après refroidissement partiel ou total du liquide. La zone de rétreint est de préférence localisée.

Avantageusement, la bouteille comprend un fond doté de caractéristiques spécifiques. Contrairement à ce qui est proposé dans l'art antérieur, seuls les fonds présentant une grande résistance à la pression peuvent être utilisés. Etonnamment, les fonds de type pétaloïde utilisés pour les contenants de boissons carbonatées se déforment peu sous l'effet de la température. Les fonds de type étoile suffisamment résistant à la pression peuvent convenir également.

Les bouteilles sont fabriquées avec un procédé conventionnel de soufflage sans étape de cristallisation post étirage dans la cavité du moule. Toute la cristallisation de la bouteille est générée pendant l'étape de bi-orientation des chaînes de polymère.

Un réglage spécifique du procédé de soufflage est cependant nécessaire afin d'obtenir une bouteille ne se déformant pas sous l'effet de la température de remplissage.

Ce procédé comporte une première étape qui consiste à chauffer une préforme à la température maximale admissible, proche de la cristallisation. Les grades de PET utilisés par l'homme du métier pour confectionner des bouteilles dites « heat set » sont utilisés. Ces grades sont généralement des produits à haut poids moléculaires ou des copolymères de PET. Les copolymères de PET basés sur l'acide téréphtalique sont particulièrement adaptés.

La préforme est étirée et soufflée dans la cavité d'un moule de géométrie adaptée et dont les parois sont refroidies afin de dissiper les calories transmises par contact, ce qui a pour effet de figer les parois de la bouteille. Contrairement au procédé HR ou le moule est chauffé à une température généralement comprise entre 115 et 140°C afin d'augmenter la cristallinité des parois latérales de la bouteille, l'invention permet d'utiliser le procédé de soufflage conventionnel consistant à utiliser des moules refroidis ou tout au plus tempérés à une température inférieure à la température de transition vitreuse du PET (environ 60°C). La partie du moule formant le fond de la bouteille est avantageusement refroidie à une température inférieure à 20°C.

Etonnamment, il a été trouvé que plus la température de la partie du moule formant le fond est froide, plus la déformation du fond de la bouteille sous l'effet de la température est faible. Ce résultat surprenant va à l'encontre du procédé actuel qui consiste à augmenter la température du moule pour augmenter la cristallisation et relaxer les contraintes des chaînes de polymère.

Les bouteilles sont produites à grande cadence de production de façon similaire aux bouteilles destinées à contenir de l'eau minérale ou des boissons carbonatées.

Le remplissage à chaud des bouteilles peut être fait rapidement après soufflage des bouteilles, ou après une période de durée variable. Un remplissage immédiat est avantageux car les bouteilles sèches présentent une meilleure stabilité thermique. Cependant pour des raisons de logistique, les bouteilles sont généralement remplies après une durée plus ou moins longue de stockage pendant laquelle il se produit un équilibre entre l'humidité de l'air et celle des parois de la bouteille. Cette reprise en humidité diminue légèrement la résistance thermique de la bouteille.

Lorsqu'une zone de rétreint est présente, le remplissage de la bouteille se différencie des remplissages à chaud par l'étape de rétraction de la zone de rétreint., étape qui permet de supprimer le vide créé dans la bouteille après refroidissement.

Le remplissage s'effectue généralement par gravité, le liquide chaud s'écoulant directement dans le contenant. En fonction des produits, la température de remplissage est comprise entre 80 et 95°C.

Lorsque le liquide chaud s'écoule dans la bouteille, la paroi de l'emballage s'échauffe rapidement sans que pour autant des déformations de la bouteille puissent être observées. L'emballage est ensuite fermé hermétiquement par l'intermédiaire d'un bouchon. L'augmentation de la température de l'air emprisonné dans l'espace de tête a pour effet de créer une légère pression dans la bouteille après fermeture.

Le fond ayant été conçu pour résister à la pression ne se déforme pas malgré la température élevée du liquide dans la bouteille. Les parois de l'emballage sont stérilisées par l'intermédiaire de la température du produit pendant une durée d'environ 3 minutes. L'opération de stérilisation comprend un retournement de la bouteille pour assurer la stérilisation de la face intérieure du bouchon et du goulot.

Ensuite la bouteille est refroidie rapidement par aspersion d'eau froide sur sa paroi extérieure. En se refroidissant, le liquide et l'espace de tête contenus dans l'emballage se contractent créant une dépression dans la bouteille. Sous l'effet de la pression négative, les parois latérales de la bouteille de faible épaisseur se déforment en « collapsant ». Il est avantageux de prévoir dans la conception de la bouteille des zones flexibles qui se déforment en collapsant sous l'effet de la pression négative, et des zones plus rigides qui ne se déforment pas. La déformation de la bouteille est ainsi localisée dans une zone délimitée. Il a été trouvé que la zone flexible forme avantageusement une géométrie cylindrique de section ovale ou circulaire.

Lorsque la température du liquide contenu dans la bouteille a atteint une température inférieure à 50°C, la bouteille est chauffée à une température élevée au niveau de la zone de retreint. Le chauffage de la zone de rétreint a pour effet de diminuer du volume de la bouteille par rétraction de la zone de rétreint. La diminution de volume de la bouteille créée par la rétraction compense la variation de volume du liquide et annule la dépression à l'intérieur de l'emballage.

Contrairement à ce qui est proposé dans l'art antérieur, ce chauffage est difficilement réalisable par rayonnement car l'apport d'énergie n'est pas suffisamment rapide pour éviter un réchauffement important du liquide.

L'étape de rétraction nécessite un apport d'énergie important sur une durée très brève. Il a été trouvé que la bouteille pouvait être chauffée par flammage ce qui provoque une rétraction rapide et reproductible de la zone de rétreint. Comme la paroi de la bouteille est en contact avec un liquide froid sur sa face interne, la face externe peut être mise en contact direct avec une flamme à très haute température pendant un temps très court. Un chauffage par air chaud peut être utilisé également.

Par rapport à ce qui est proposé dans l'art antérieur, il a été trouvé que la bouteille doit être chauffée de façon symétrique, sinon la bouteille perd sa verticalité et la géométrie finale n'est pas reproductible. Préférentiellement, lors de l'étape de rétraction, la bouteille est en rotation devant deux sources de chaleur disposées symétriquement par rapport à l'axe de rotation. Avantageusement, la distance entre la paroi de la bouteille et la source de chaleur est constante.

Avant l'étape de rétraction, la géométrie de la zone de rétreint forme avantageusement une surface convexe homogène sur la circonférence de la bouteille. La surface convexe présente plusieurs avantages par rapport à une surface cylindrique, conique ou concave. Il a été trouvé que la rétraction d'une surface convexe stabilise le procédé de rétraction et permet une grande reproductibilité de la géométrie finale de la bouteille. Lorsque la zone de rétreint n'est pas convexe, il est souvent observé de fortes variations de la perpendicularité entre l'axe du goulot et le fond de la bouteille.

### Exemple

La bouteille a un poids de 24 grammes pour une contenance de 500ml. Le fond est de type pétaloïde, le corps présente une zone supérieure cylindrique de fine épaisseur, et une zone inférieure de rétreint convexe. Cette bouteille est obtenue par soufflage dans un moule à 12°C d'une préforme chauffée à 100°C. Un copolymère PET à base d'acide téréphtalique est utilisé pour mouler les préformes (Cleartuf P85HF de M&G Polimeri Italia). La bouteille est stockée pendant 3 jours avant remplissage. La bouteille est rincée et remplie à 85°C selon le protocole de remplissage utilisé dans la profession. Après refroidissement de la bouteille, la zone supérieure s'est déformée de sous l'effet de la dépression dans la bouteille. La déformation de la zone supérieure crée une diminution du volume de la bouteille sensiblement égale à 3,5%. La zone de rétreint convexe est alors chauffée par flammage pendant 5s. Pendant la l'étape de rétreint, la bouteille est mise en rotation devant deux stations de flammage diamétralement opposées. Après rétreint, la dépression dans la bouteille est supprimée ; la zone supérieure a recouvrée sa géométrie initiale et la zone de rétreint initialement convexe forme une surface cylindrique.

## Revendications

1. Procédé de fabrication d'un emballage rempli à chaud comprenant une étape de soufflage d'une préforme dans la cavité d'un moule, **caractérisé par le fait que** l'on utilise une préforme de géométrie, de poids et de composition identiques à une préforme d'emballage rempli à froid et que pendant toute la durée de fabrication de l'emballage, on maintient le moule à une température inférieure à la température de transition vitreuse du matériau qui constitue l'emballage.

2. Procédé selon la revendication 1 dans lequel on fabrique un emballage en PET en maintenant le moule à une température inférieure à 60°C.

3. Procédé selon la revendication 2 dans lequel le fond du moule est maintenu à une température inférieure à 20°C.

4. Procédé selon la revendication 2 ou 3 dans lequel le moule est maintenu à une température entre 1 et 15°C.

5. Emballage obtenu selon le procédé décrit dans une quelconque des revendications précédentes comprenant une paroi latérale et un fond, ce dernier étant conçu pour résister à une pression positive.

6. Emballage selon la revendication 5 **caractérisé par le fait que** la paroi latérale est également conçue pour résister à une pression positive.

7. Emballage selon la revendication 5 ou 6 comprenant un fond de type pétaloïde.

8. Emballage selon la revendication 5 ou 6 comprenant un fond de type étoile.

9. Emballage selon l'une quelconque des revendications 5 à 8 comprenant une zone latérale flexible cylindrique, de section circulaire ou ovale, qui se déforme lors du refroidissement et compense des variations de volume du liquide comprises entre 2 et 7% .

10. Emballage selon l'une quelconque des revendications 5 à 9 comprenant une zone de rétreint de géométrie adaptée pour diminuer le volume de la bouteille de 2 à 7% par rétraction sous l'effet d'une température supérieure à la température de remplissage.

11. Emballage selon la revendication précédente ayant une zone de rétreint convexe.

12. Emballage selon l'une quelconque des revendications 5 à 11 se présentant sous la forme d'une bouteille en PET de faible poids pour le conditionnement d'un liquide rempli à une température comprise entre 80 °C et 95 °C.

13. Bouteille selon la revendication 12 dépourvue de panneaux de compensation , comprenant une première zone, cylindrique, qui en se déformant permet de diminuer le volume de la bouteille de 2 à 7%, et une deuxième zone dont la rétraction par chauffage permet de diminuer le volume de la bouteille au moins dans les mêmes proportions.

14. Bouteille selon la revendication 10 ou 11 réalisée à partir d'un grade de PET étant un copolymère de haut poids moléculaire à base d'acide téréphtalique.
